# DEMANDE DE BREVET EUROPEEN

(11) **EP 2 584 536 A1**
(43) Date de publication de la demande: **24.04.2013**
(21) Numéro de dépôt: 11306343.2
(22) Date de dépôt: 17.10.2011
(51) Int. Cl.: G07B 15/02, B60L 11/18

(54) **Procédé de fourniture de services personnalisés à un véhicule**

(71) Demandeur: Modulowatt, 75016 Paris (FR)
(72) Inventeur: Ammoun, Samer, 75016 Paris (FR)
(74) Mandataire: Ilgart, Jean-Christophe

(57) **Abrégé**

L'invention concerne un procédé de fourniture de service personnalisé à un véhicule stationnant à proximité d'une borne, caractérisé en ce qu'il comprend les étapes suivantes :
- une étape de détection (1) de véhicule apte à détecter un véhicule en stationnement à proximité de la borne,
- une étape d'activation (2) de la borne, dès lors qu'un véhicule est détecté,
- une étape (3) de validation ou non de la présence du véhicule détecté en stationnement à proximité de la borne,
- si la présence du véhicule est validée, une étape de sélection (4) d'au moins un service susceptible d'être fourni au véhicule, et
- une étape de fourniture du service (6) au véhicule comme suite à l'étape de sélection.

## Description

### Domaine technique et art antérieur

L'invention concerne un procédé de fourniture de service personnalisé à un véhicule stationnant à proximité d'une borne tel que, par exemple, un procédé apte à fournir une autorisation de stationnement à un véhicule automobile sur une place de stationnement prédéterminée.

Dans le cas où le véhicule est un véhicule électrique, l'invention concerne également un procédé apte à fournir de l'énergie électrique à une batterie électrique du véhicule électrique en stationnement sur une place de stationnement prédéterminée.

Des systèmes aptes à gérer le stationnement de véhicules automobiles ou la fourniture d'énergie électrique à des véhicules automobiles électriques sont connus de l'art antérieur.

Pour le stationnement, le système le plus connu consiste en un dispositif de bord de voie qui propose de payer une durée de stationnement au moment de l'arrivée du véhicule. La durée prépayée est souvent présentée sous la forme d'un ticket déposé, par le conducteur lui-même, derrière le pare-brise du véhicule. Les inconvénients de ce type de système résident dans la rigidité d'utilisation. En effet, le système est par nature mono-service (stationnement uniquement), il nécessite une présence physique et des manoeuvres précises du conducteur lors du premier paiement et de toute demande d'extension de la durée de stationnement. Ce côté rigide ne s'adapte pas à la diversité des situations de la vie courante et les conducteurs finissent souvent par payer beaucoup, pas assez ou bien pas du tout. Ce système nécessite également un système de contrôle humain pour verbaliser les véhicules squatters.

Pour pouvoir proposer d'autres services tels que, par exemple, la charge électrique de véhicules électriques, le même système se décline en des bornes individuelles pour chaque place tout en gardant le même schéma de fonctionnement : le conducteur doit se présenter à la borne avec un moyen de paiement, choisir les services (par exemple le type de recharge) et les prépayer. L'IHM (IHM pour «Interface Homme Machine ») de la borne sert donc de témoin de paiement en cas de contrôle. Plus commode que le premier système, cet autre système conserve cependant les mêmes procédures d'identification auprès de la borne, de paiement et de choix de services ainsi que la procédure de contrôle humain.

Un autre type de système de gestion de stationnement est connu de l'art antérieur, dans lequel le conducteur utilise son téléphone portable pour payer le service de stationnement. Le conducteur doit communiquer la zone, le tarif et la durée de stationnement vers un système central. Le contrôleur doit disposer des outils nécessaires qui lui permettent de renseigner l'identité du véhicule au système central pour vérifier le bon paiement. Les inconvénients de ce système sont la complexité du système de contrôle, la gestion de la double identité téléphone/véhicule et la dépendance au téléphone portable.

Le procédé de fourniture de service de l'invention ne présente pas les inconvénients des procédés mis en oeuvre par les systèmes de l'art antérieur mentionnés ci-dessus.

### Exposé de l'invention

En effet, l'invention concerne un procédé de fourniture de service personnalisé à un véhicule stationnant à proximité d'une borne, le procédé comprenant les étapes suivantes :
- une étape de détection de véhicule apte à délivrer un signal de présence de véhicule dès lors qu'un véhicule est en stationnement à proximité de la borne,
- une étape d'activation de la borne par le signal de présence de véhicule dès lors qu'un véhicule est détecté en stationnement à proximité de la borne,
- une étape de validation ou non de la présence du véhicule détecté en stationnement à proximité de la borne,
- si la présence du véhicule est validée à proximité de la borne, une étape de sélection du ou des services susceptibles d'être fournis au véhicule à partir de la borne,
- une étape d'activation d'au moins un service sélectionné par l'étape de sélection, et
- une étape de fourniture du service sélectionné qui a été activé à l'étape d'activation.

Selon une caractéristique supplémentaire du procédé de l'invention, une étape de comptage compte la durée de l'étape de fourniture du service.

Selon une autre caractéristique supplémentaire du procédé de l'invention, au moins une étape supplémentaire de détection et au moins une étape supplémentaire de validation associée à l'étape supplémentaire de détection sont effectuées, préférentiellement de façon périodique, durant l'étape de fourniture du service.

Selon encore une autre caractéristique supplémentaire du procédé de l'invention, le service sélectionné est un stationnement du véhicule qui est activé dès lors que la présence du véhicule est validée auprès de la borne.

Selon encore une autre caractéristique supplémentaire du procédé de l'invention, dans le cas où le véhicule est un véhicule électrique, le service sélectionné est une charge électrique d'une batterie du véhicule électrique qui est activée dès lors qu'un câble de liaison apte à véhiculer de l'énergie électrique est connecté entre la batterie électrique du véhicule et une alimentation électrique de la borne.

Selon encore une autre caractéristique supplémentaire du procédé de l'invention, dans le cas où le véhicule est un véhicule électrique, un premier service sélectionné est un stationnement du véhicule électrique auprès de la borne qui est activé dès lors que la présence du véhicule est validée auprès de la borne et un deuxième service sélectionné est une charge électrique d'une batterie du véhicule qui est activée dès lors qu'un câble de liaison apte à transférer de l'énergie électrique est connecté entre la batterie électrique du véhicule et une alimentation électrique de la borne.

Selon encore une autre caractéristique supplémentaire du procédé de l'invention, la quantité d'énergie électrique transférée entre la borne et le véhicule électrique est comptée.

Selon encore une autre caractéristique supplémentaire du procédé de l'invention, l'étape apte à valider ou non la présence du véhicule détecté en stationnement à proximité de la borne, comprend:
- une étape de transfert, à partir de la borne, d'une donnée d'interrogation apte à interroger le véhicule détecté qui stationne auprès de la borne ;
- une étape de transfert, en réponse à la donnée d'interrogation, à partir du véhicule, d'une donnée d'identification qui contient une donnée apte à reconnaître le véhicule et une donnée qui correspond aux différents services susceptibles d'être fournis au véhicule à partir de la borne, et
- une validation de la présence du véhicule à proximité de la borne à partir de la donnée d'identification.

Selon encore une autre caractéristique supplémentaire du procédé de l'invention, en l'absence de réponse du véhicule à la donnée d'interrogation, la présence du véhicule n'est pas validée.

Selon encore une autre caractéristique supplémentaire du procédé de l'invention, lorsque la présence du véhicule n'est pas validée, un signal de non validation de présence de véhicule est transmis, à partir de la borne, vers une plate-forme de gestion en vue de l'enlèvement du véhicule.

Selon encore une autre caractéristique supplémentaire du procédé de l'invention, des données tarifaires qui correspondent au coût du service fourni au véhicule sont calculées par un calculateur de la borne et transmises vers une plate-forme de gestion.

Selon encore une autre caractéristique supplémentaire de l'invention, le calcul des données tarifaires est modulé en fonction d'une combinaison des services qui ont été fournis au véhicule.

Le procédé de l'invention présente l'avantage d'agréger des informations concernant le véhicule en stationnement pour proposer à celui-ci des services adéquats tout en automatisant la procédure de contrôle et le comptage exact des services consommés.

Dans un mode de réalisation particulièrement avantageux, le procédé de l'invention propose de coupler le stationnement du véhicule à d'autres services adaptés au véhicule stationné, par exemple la charge en énergie électrique du véhicule.

Le procédé de l'invention permet aussi l'optimisation de l'exploitation des places de stationnement en prélevant automatiquement le montant exact des services consommés et en détectant les véhicules squatters.

### Brève description des figures

D'autres caractéristiques et avantages de l'invention apparaîtront à la lumière de la description qui va suivre, faite en référence aux figures jointes parmi lesquelles :
- la figure 1 représente un véhicule en approche d'une borne ;
- la figure 2 représente un organigramme du procédé de fourniture de service de l'invention ;
- la figure 3 représente, de façon symbolique, les différents circuits qui sont aptes à mettre en ouvre le procédé de fourniture de service de l'invention.

Sur toutes les figures, les mêmes références désignent les mêmes éléments.

### Exposé détaillé de modes de réalisation particuliers

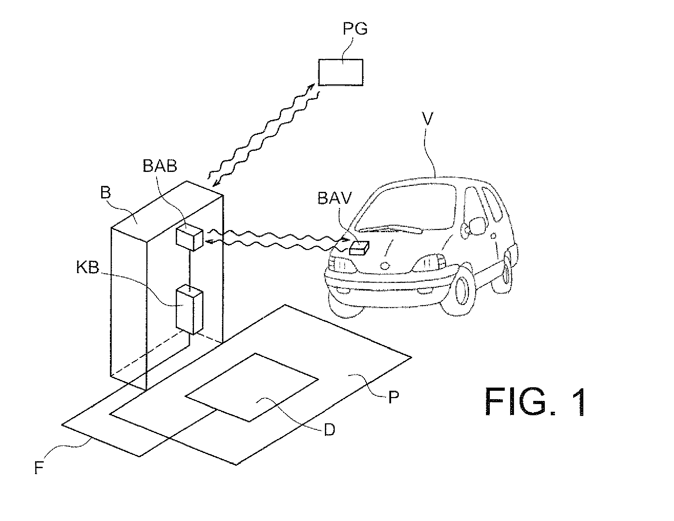

La figure 1 représente un véhicule V en approche d'une borne B. La borne B est placée à proximité d'une place de stationnement P.

La borne B comprend une balise ou un badge de communication BAB et un calculateur KB relié à la balise de communication BAB. Le véhicule V comprend une balise ou un badge de communication BAV apte à communiquer par voie hertzienne avec la balise de communication BAB de la borne. A la place de stationnement P est associé un détecteur D qui est apte à détecter la présence d'un véhicule. Dans le mode de réalisation de l'invention représenté en figure 1, le détecteur D est intégré au niveau du sol de la place de stationnement et est apte à détecter, par exemple par voie magnétique ou par voie optique, la présence d'un véhicule en stationnement. Le détecteur D est relié au calculateur KB, par exemple par une liaison filaire F. Selon le mode de réalisation préférentiel de l'invention, les balises BAB et BAV sont des balises connues sous le nom de « balises DSRC » (DSRC pour « Dedicated Short-Range Communications ») aptes à émettre et recevoir des ondes électromagnétiques haute fréquence.

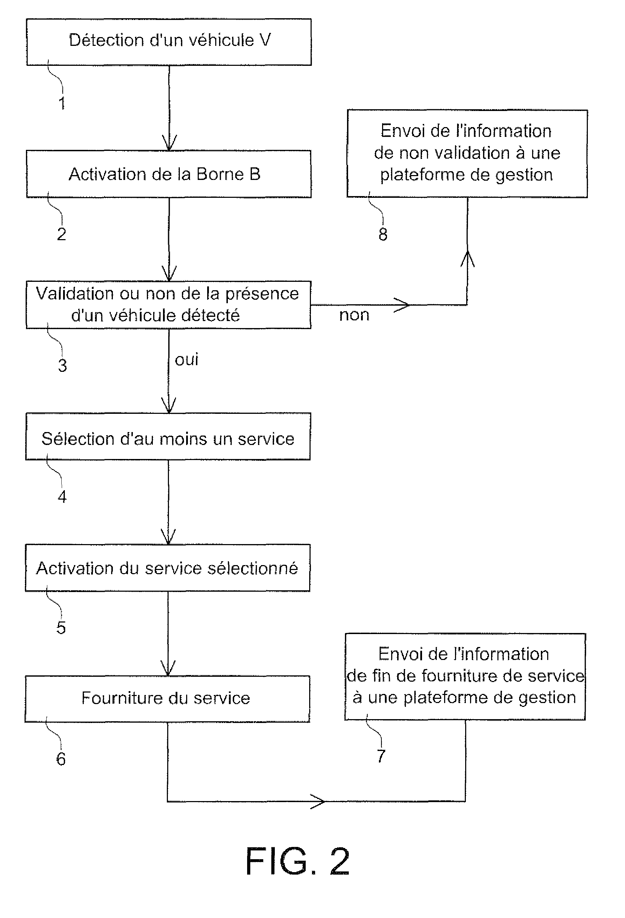

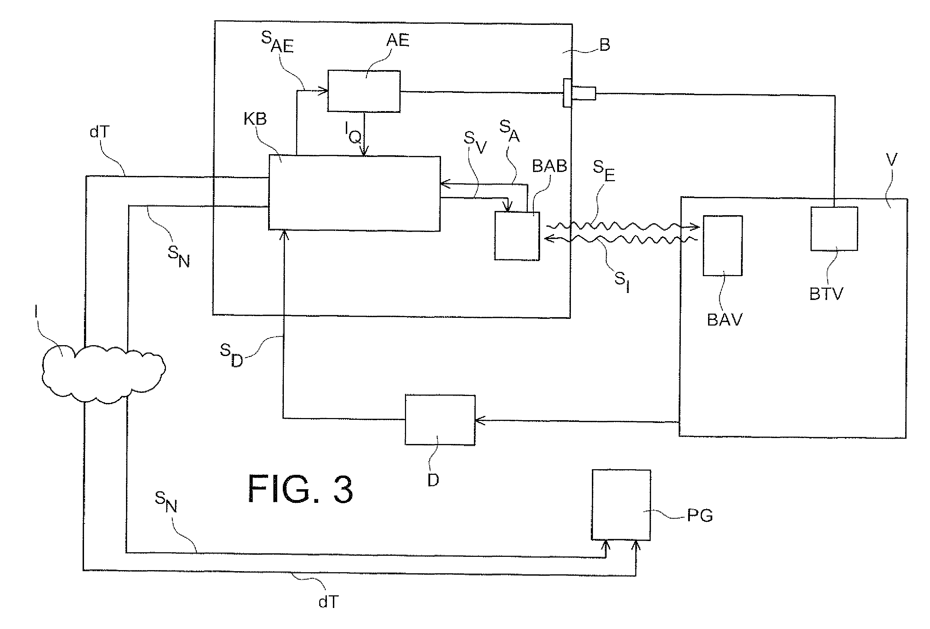

La figure 2 représente un organigramme du procédé de fourniture de services à un véhicule de l'invention et la figure 3 représente, de façon symbolique, dans le cas où le véhicule est un véhicule électrique, les différents circuits qui sont aptes à mettre en oeuvre le procédé de fourniture de services de l'invention.

En plus des circuits mentionnés en référence à la figure 1, la figure 3 représente la batterie électrique BTV que contient le véhicule et l'alimentation électrique AE que contient la borne.

Le procédé de fourniture de service de l'invention comprend les étapes essentielles suivantes :
- une étape 1 de détection de véhicule,
- une étape 2 d'activation de la borne,
- une étape 3 de validation ou non de la présence du véhicule détecté,
- une étape 4 de sélection d'au moins un service à fournir au véhicule dès lors que la présence du véhicule est validée,
- une étape 5 d'activation du service sélectionné,
- une étape 6 de fourniture du service activé au véhicule, et
- une étape 7 d'envoi d'une information de service fourni à une plate-forme de gestion dès lors que la fourniture du service est terminée.

En référence à l'étape 3, lorsque le stationnement du véhicule n'est pas validé, le procédé comprend une étape d'envoi de signal de non validation à la plate-forme de gestion en vue de l'enlèvement du véhicule.

La détection 1 du véhicule s'opère à l'aide du détecteur D. Le détecteur D est, par exemple, une boucle magnétique placée dans le sol et apte à détecter la présence d'une masse métallique qui se positionne au-dessus d'elle. Dans un autre mode de réalisation de l'invention, le détecteur D est une caméra de surveillance placée, par exemple, dans la borne B.

L'activation 2 de la borne est déclenchée par le signal de détection S_{D} que délivre le détecteur D. A cette fin, le signal S_{D} est transmis à un calculateur KB qui est placé dans la borne B.

Dès lors que le calculateur KB reçoit le signal de détection S_{D}, il délivre un signal de validation S_{V} qui est transmis à la balise de borne BAB. Le signal de validation S_{V} commande l'émission, par la balise BAB, d'un signal électromagnétique S_{E} en direction du véhicule V en stationnement.

Deux cas se présentent alors : soit le véhicule est un véhicule dont le stationnement est autorisé, soit le véhicule est un véhicule dont le stationnement n'est pas autorisé.

Dans ce dernier cas (stationnement du véhicule non autorisé), il n'y a pas de réponse du véhicule au signal S_{E} car le véhicule n'est pas équipé des circuits aptes à traiter le signal S_{E}. En l'absence de réponse au signal S_{E}, le calculateur KB de la borne B délivre un signal S_{N} qui est transmis, par exemple par un lien Internet I, à une plate-forme de gestion PG. Le signal S_{N} contient des données qui traduisent que la place de stationnement associée à la borne B est indûment occupée. Il est alors possible de faire enlever le véhicule.

Dans le cas où le véhicule est un véhicule autorisé à stationner, dès lors que le signal S_{E} est reçu par la balise BAV du véhicule, celle-ci émet un signal S_{I} en direction de la balise de la borne BAB. Le signal S_{I} contient une donnée d'identification ID apte à identifier le véhicule qui stationne. La donnée d'identification ID contient une donnée apte à reconnaître le véhicule et une donnée qui correspond aux différents services susceptibles d'être fournis au véhicule à partir de la borne. De façon avantageuse, la donnée ID peut être différente d'un véhicule à l'autre, permettant ainsi une fourniture de services personnalisés à différents véhicules. A la réception du signal S_{I}, la balise de borne BAB délivre au calculateur KB un signal S_{A} qui sélectionne le ou les services susceptibles d'être fournis au véhicule, parmi lesquels figure l'autorisation de stationnement du véhicule. Dès lors que le signal S_{A} est reçu par le calculateur KB, le comptage de la durée de stationnement débute. Par ailleurs, tout service apte à être fourni au véhicule à partir de la borne est susceptible d'être activé. Il en est ainsi, par exemple, de la fourniture d'énergie électrique au véhicule à partir de l'alimentation électrique AE, l'alimentation électrique AE étant alors activée par un signal d'activation S_{AE} délivré par le calculateur KB. Il suffit alors au conducteur du véhicule de brancher un câble entre la batterie du véhicule BTV et l'alimentation électrique de la borne AE pour activer la charge de la batterie du véhicule. De façon préférentielle, la charge de la batterie du véhicule est activée à l'aide d'un détecteur d'insertion de prise, dès que le branchement est effectué. La quantité d'énergie électrique fournie au véhicule est alors mesurée par tout système de mesure connu en soi, associé à l'alimentation AE. L'information I_{Q} relative à la quantité d'énergie électrique mesurée est alors transmise au calculateur KB.

Des services autres que la charge de la batterie du véhicule sont concernés par l'invention (non représentés sur les figures). Ainsi, par exemple, l'invention concerne-t-elle également la fourniture de données de divertissement telles que des données musicales, de films, etc. Un calculateur de bord du véhicule est alors apte à recevoir les données de divertissement par tout moyen connu en soi, par exemple en utilisant une communication filaire sur le câble de recharge électrique, après que demande en a été faite au calculateur de la borne.

Selon un perfectionnement de l'invention, la présence du véhicule autorisé est questionnée périodiquement en vérifiant, d'une part, qu'un signal S_{D} est bien délivré par le détecteur D tout au long de la fourniture du ou des services et, d'autre part, qu'un signal S_{A} d'autorisation de stationnement provient bien du véhicule tout au long de la fourniture du ou des services. En l'absence des signaux S_{D} et S_{A}, toute fourniture de service est alors interrompue.

Chacun des services rendus au véhicule est facturé au propriétaire du véhicule. Ainsi en est-il, par exemple, de la durée de stationnement ou de la quantité d'énergie électrique fournie.

Le calculateur KB de la borne B calcule à cette fin des données tarifaires dT qui correspondent aux coûts des différents services fournis au véhicule (durée du stationnement, quantité d'énergie électrique fournie, etc.). Dans le cadre de l'invention, il est avantageusement possible de moduler les données tarifaires dT en proposant, par exemple, des tarifs différents pour des combinaisons de services différentes. A titre d'exemple non limitatif, le tarif associé au stationnement du véhicule peut ainsi être divisé par deux pendant la durée où le véhicule électrique est en charge.

Dès lors que le véhicule quitte la place de stationnement, le signal issu du détecteur D indique l'absence du véhicule. Le comptage de la durée de stationnement est interrompu et les données tarifaires dT sont transmises, par exemple par lien Internet, à la plate-forme PG en vue d'une facturation des services qui ont été rendus au véhicule.

## Revendications

1. Procédé de fourniture de service personnalisé à un véhicule (V) stationnant à proximité d'une borne (B), **caractérisé en ce qu'**il comprend les étapes suivantes :
- une étape de détection (1) de véhicule (V) apte à délivrer un signal de présence de véhicule (S_{D}) dès lors qu'un véhicule est en stationnement à proximité de la borne,
- une étape d'activation (2) de la borne par le signal de présence de véhicule, dès lors qu'un véhicule est détecté en stationnement à proximité de la borne,
- une étape (3) de validation ou non de la présence du véhicule détecté (V) en stationnement à proximité de la borne (B),
- si la présence du véhicule est validée à proximité de la borne, une étape de sélection (4) du ou des services susceptibles d'être fournis au véhicule à partir de la borne (B),
- une étape d'activation (5) d'au moins un service sélectionné par l'étape de sélection, et
- une étape de fourniture du service sélectionné (6) qui a été activé à l'étape d'activation.

2. Procédé selon la revendication 1 et qui comprend, en outre, une étape de comptage de la durée de l'étape de fourniture du service.

3. Procédé selon l'une des revendications 1 ou 2, dans lequel au moins une étape supplémentaire de détection (2) et au moins une étape supplémentaire de validation (3) associée à l'étape supplémentaire de détection sont effectuées durant l'étape de fourniture du service.

4. Procédé selon l'une des revendications 2 ou 3, dans lequel le service sélectionné est un stationnement du véhicule auprès de la borne qui est activé dès lors que la présence du véhicule est validée auprès de la borne.

5. Procédé selon l'une des revendications 2 ou 3, dans lequel, lorsque le véhicule est un véhicule électrique, le service sélectionné est une charge électrique d'une batterie du véhicule électrique (BTV) qui est activée dès lors qu'un câble de liaison apte à véhiculer de l'énergie électrique est connecté entre la batterie électrique du véhicule (BTV) et une alimentation électrique (AE) de la borne.

6. Procédé selon la revendication 2 ou 3, dans lequel, lorsque le véhicule est un véhicule électrique, un premier service sélectionné est un stationnement du véhicule électrique auprès de la borne qui est activé dès lors que la présence du véhicule est validée auprès de la borne et un deuxième service sélectionné est une charge électrique d'une batterie du véhicule électrique qui est activée dès lors qu'un câble de liaison apte à véhiculer de l'énergie électrique est connecté entre la batterie électrique du véhicule (BTV) et une alimentation électrique (AE) de la borne.

7. Procédé selon l'une des revendications 5 ou 6, dans lequel la quantité d'énergie électrique véhiculée entre l'alimentation électrique (AE) et la batterie électrique du véhicule (BTV) est comptée.

8. Procédé selon l'une quelconque des revendications précédentes, dans lequel l'étape (3) apte à valider ou non la présence du véhicule détecté en stationnement à proximité de la borne, comprend:
- une étape de transfert, à partir de la borne, d'une donnée d'interrogation (S_{E}) apte à interroger le véhicule détecté qui stationne auprès de la borne ;
- une étape de transfert, en réponse à la donnée d'interrogation, à partir du véhicule, d'une donnée d'identification (ID) qui contient une donnée apte à reconnaître le véhicule et une donnée qui correspond aux différents services susceptibles d'être fournis au véhicule à partir de la borne, et
- une validation de la présence du véhicule à proximité de la borne à partir de la donnée d'identification (ID).

9. Procédé selon la revendication 8 dans lequel, en l'absence de réponse du véhicule à la donnée d'interrogation (S_{E}), la présence du véhicule n'est pas validée.

10. Procédé selon la revendication 9 dans lequel, lorsque la présence du véhicule n'est pas validée, un signal de non validation de présence de véhicule est transmis (8), à partir de la borne, vers une plate-forme de gestion (PG) en vue de l'enlèvement du véhicule.

11. Procédé selon l'une quelconque des revendications précédentes dans lequel des données tarifaires (dT) qui correspondent au coût du service fourni au véhicule sont calculées par un calculateur de la borne (B) et transmises vers une plate-forme de gestion (PG).

12. Procédé selon la revendication 11, dans lequel le calcul des données tarifaires est modulé en fonction d'une combinaison de plusieurs services qui ont été fournis au véhicule.
